# EUROPÄISCHE PATENTSCHRIFT

(11) **EP 3 290 948 B1**
(45) Veröffentlichungstag und Bekanntmachung des Hinweises auf die Patenterteilung: **25.03.2020**
(21) Anmeldenummer: 16186584.5
(22) Anmeldetag: 31.08.2016
(51) Int. Cl.: G01S 13/76, G01S 13/82, H04B 5/00, G06K 19/07, G06K 19/077

(54) **POSITIONSERFASSUNGSSENSOR UND -SYSTEM**
POSITION DETECTING SENSOR AND SYSTEM
CAPTEUR ET SYSTEME DE DETERMINATION DE POSITION

(43) Veröffentlichungstag der Anmeldung: 07.03.2018
(73) Patentinhaber: Siemens Aktiengesellschaft, 80333 München (DE)
(72) Erfinder: Horst, Dieter, 90556 Cadolzburg (DE); Meyer, Heinrich, 90530 Wendelstein (DE)

(56) Entgegenhaltungen:
- WO-A1-2009/135722
- DE-A1-102005 062 827
- DE-A1-102009 008 174
- DE-A1-102012 202 920

## Beschreibung

In WO 2013/017596 A1 ist ein Verfahren zur Ortung eines RFID-Tags mittels zumindest eines RFID-Lesegeräts beschrieben, bei dem das RFID-Lesegerät ein Abfragesignal aussendet, das ein Breitbandsignal umfasst. Das RFID-Tag moduliert durch Variation seiner Antennenimpedanz das Abfragesignal mit einem Codesignal und reflektiert es als Reflexionssignal. Das RFID-Lesegerät empfängt das Reflexionssignal und erzeugt daraus das Codesignals sowie ein gestreutes Breitbandsignal. Durch Vergleich des Breitbandsignals mit dem gestreuten Breitband-signal ermittelt das RFID-Lesegerät eine Laufzeit des Breitbandsignals. Aus einem resultierenden Laufzeitunterschied ermittelt das RFID-Lesegerät die Distanz zwischen dem RFID-Lesegerät und dem RFID-Tag.

Aus DE 10 2009 008174 A1 ist ein Verfahren zur Ermittlung von Entfernung, Geschwindigkeit und Bewegungsrichtung eines RFID-Transponders bekannt, bei dem der RFID-Transponder auf übliche Weise mittels eines RFID-Lesegeräts abgefragt wird. Hierzu sendet das RFID-Lesegerät ein phasenweise moduliertes Versorgungsträgersignal aus. Ein Radarmodul sendet gleichzeitig ein Radarsignal aus, das vom RFID-Transponder empfangen und reflektiert wird. Das Versorgungsträgersignal und das Radarsignal weisen unterschiedliche Frequenzen auf. Das reflektierte Radarsignal wird wiederum vom Radarmodul empfangen. Aus dem reflektierten empfangenen Radarsignal wird eine Position des RFID-Transponders ermittelt. Das Radarsignal wird insbesondere dann ausgesendet, wenn auf das Versorgungsträgersignal keine Abfragedaten aufmoduliert werden.

EP 2 269 322 B1 betrifft eine Nahfeldkommunikationsvorrichtung zum Detektieren und Lesen von externen RFID-Tags, die eine Resonanzschleifenantennenschaltung aufweist. Die Resonanzschleifenantennenschaltung umfasst eine Antenne mit einer nicht-konstanten Antenneninduktivität und eine variable Komponente zur Einstellung der Resonanzschleifenantennenschaltung. De Antenne weist einen Betriebszielbereich für Nahfeldkommunikation auf, in dem die Antenneninduktivität empfindlich gegenüber Interferenzen ist, durch die sich der Betriebszielbereich ändern kann. Mit der Resonanzschleifenantennenschaltung ist eine integrierte Schaltung verbunden, die ein Steuergerät für die Resonanzschleifenantennenschaltung, eine Induktivitätsdetektorschaltung, eine Aufwachschaltung und eine Antenneneinstellungsschaltung umfasst. Die Aufwachschaltung reagiert auf eine vorgegebene Änderung der Antenneninduktivität, die durch die Induktivitätsdetektorschaltung detektiert wird, um das Steuergerät von einem Niedrigleistungsschlafmodus in einen Kommunikationsmodus umzuschalten.

In EP 3 031 039 A1 ist ein RFID-basiertes Positionserfassungssystem mit einem an einem zu erfassenden Objekt angebrachten RFID-Tag beschrieben, das mittels eines niederfrequenten Wecksignals aus einem Niedrigenergiemodus geweckt werden kann. Das Wecksignal umfasst Positionsinformationen, die einem das RFID-Tag mittels des Wecksignals erfassenden RFID-Lesegerät zugeordnet sind. Nach Aufwecken des RFID-Tags durch Empfang des Wecksignals erzeugt das RFID-Tag ein hochfrequentes Antwortsignal, das einen Identifizierungscode des RFID-Tags und die mittels des Wecksignals übermittelten Positionsinformationen umfasst. US 2015/0358697 A1 betrifft demgegenüber ein RFID-basiertes Positionserfassungssystem, bei dem ein Wecken eines RFID-Tags aus einem Niedrigenergiemodus mittels eines zusätzlichen GPS-Sensors oder Bewegungssensors erfolgt.

Der vorliegenden Erfindung liegt daher die Aufgabe zugrunde, ein Funk-Transponder-basierten Positionserfassungssensor zu schaffen, der einerseits in einen Ruhezustand mit reduziertem Energieverbrauch versetzt werden und andererseits zuverlässig bei Eintritt vorgegebener Ereignisse bzw. Erreichen vorgegebener Referenzpunkte geortet werden kann, sowie ein entsprechendes Positionserfassungssystem anzugeben.

Diese Aufgabe wird erfindungsgemäß durch einen Positionserfassungssensor mit den in Anspruch 1 angegebenen Merkmalen und durch ein Positionserfassungssystem mit den in Anspruch 5 angegebenen Merkmalen gelöst. Vorteilhafte Weiterbildungen der vorliegenden Erfindung sind in den abhängigen Ansprüchen angegeben.

Das erfindungsgemäße Positionserfassungssystem umfasst einen an einem zu erfassenden Gegenstand befestigbaren ersten Funk-Transponder, der eine mit einer Antenne verbundene Sende- und Empfangseinheit zum Datenaustausch über eine Funk-Transponder-Schnittstelle, eine Speichereinheit zur persistenten Datenspeicherung und eine Energieversorgungsquelle aufweist, die mit der Sende- und Empfangseinheit und der Speichereinheit verbindbar ist. Die Speichereinheit ist mittels einem Positionserfassungssystem zugeordneter erster Funk-Transponder-Lesegeräte auslesbar bzw. beschreibbar. Vorzugsweise sind die ersten Funk-Transponder-Lesegeräte Basisstationen eines RFID-basierten Positionserfassungssystems oder bilden diese. Darüber hinaus ist in der Speichereinheit des ersten Funk-Transponders zumindest ein Transponder-Identifikator gespeichert. Der erste Funk-Transponder ist wahlweise in einen Ruhezustand mit reduziertem Energieverbrauch und in einen aktiven Betriebszustand mit vollständigem Funktionsumfang versetzbar. Außerdem ist der erste Funk-Transponder dazu ausgestaltet und eingerichtet, im aktiven Betriebszustand zumindest eine Funk-Verbindung zur Positionserfassung zu zumindest einem ersten Funk-Transponder-Lesegerät aufzubauen.

Erfindungsgemäß ist ein induktiv durch ein Funk-Transponder-Lesegerät mit Energie versorgbarer zweiter Funk-Transponder vorgesehen, der eine mit einer Antenne verbundene Sende- und Empfangseinheit zum Datenaustausch über eine Funk-Transponder-Schnittstelle und eine Speichereinheit zur persistenten Datenspeicherung aufweist. Die Speichereinheit ist mittels zweiter Funk-Transponder-Lesegeräte auslesbar bzw. beschreibbar. Vorzugsweise ist der zweite Funk-Transponder ein UHF-Transponder, wobei die zweiten Funk-Transponder-Lesegeräte in diesem Fall UHF-Transponder-Lesegeräte sind. Darüber hinaus ist auch in der Speichereinheit des zweiten Funk-Transponders zumindest ein Transponder-Identifikator gespeichert.

Der zweite Funk-Transponder ist erfindungsgemäß dazu ausgestaltet und eingerichtet, bei Eintritt in einen Erfassungsbereich eines zweiten Funk-Transponder-Lesegerätes den ersten Funk-Transponder aus dem Ruhezustand in den aktiven Betriebszustand zu versetzen. Auf diese Weise sind keine eine permanente Energieversorgung erfordernden Maßnahmen, wie Verwendung von GPS- oder Trägheitssensoren oder Überwachung von Antenneninduktivitätsänderungen, erforderlich, um den zur Positionserfassung verwendeten ersten Funk-Transponder ereignis- bzw. ortsabhängig zuverlässig aus einem Niedrigenergiemodus zu reaktivieren.

Der erste Funk-Transponder und der zweite Funk-Transponder können beispielsweise in einem gemeinsamen Sensorgehäuse angeordnet sein.

Vorzugsweise umfasst die einem Funk-Transponder zugeordnete Positionsinformation den jeweiligen Transponder-Identifikator. Vorteilhafterweise sind die in den Speichereinheiten des ersten und des zweiten Funk-Transponders gespeicherten Transponder-Identifikatoren identisch.

Entsprechend der vorliegenden Erfindung ist der erste Funk-Transponder mit dem zweiten Funk-Transponder elektrisch verbunden. Der zweite Funk-Transponder ist dazu ausgestaltet und eingerichtet, bei Eintritt in einen Erfassungsbereich eines zweiten Funk-Transponder-Lesegerätes den ersten Funk-Transponder aus dem Ruhezustand in den aktiven Betriebszustand zu versetzen. Dementsprechend ist der erste Funk-Transponder dazu ausgestaltet und eingerichtet, nach einem Aktivieren aus dem Ruhezustand zumindest eine Funk-Verbindung zur Positionserfassung zu zumindest einem ersten Funk-Transponder-Lesegerät aufzubauen. Die zweiten Funk-Transponder-Lesegeräte müssen in diesem Fall also keine Verbindung zu einem Server des Positionserfassungssystems aufweisen. Darüber hinaus ist die Speichereinheit des ersten Funk-Transponders vorteilhafterweise über den zweiten Funk-Transponder mittels zweiter Funk-Transponder-Lesegeräte auslesbar bzw. beschreibbar. Auf diese Weise können neben dem Transponder-Identifikator auch andere im ersten Funk-Transponder gespeicherte Daten mittels eines zweiten Funk-Transponders ausgelesen oder geändert werden. Außerdem kann der zweite Funk-Transponder insbesondere in den ersten Funk-Transponder integriert sein.

Das erfindungsgemäße Positionserfassungssystem umfasst zumindest einen Positionserfassungssensor entsprechend vorangehenden Ausführungen. Außerdem sind mehrere einem Positionserfassungssystem zugeordnete erste Funk-Transponder-Lesegeräte vorgesehen, die jeweils dazu ausgestaltet und eingerichtet sind, eine Speichereinheit eines vom Positionserfassungssensor umfassten ersten Funk-Transponders auszulesen bzw. zu beschreiben. Darüber hinaus umfasst das erfindungsgemäße Positionserfassungssystem mehrere zweite Funk-Transponder-Lesegeräte, die jeweils dazu ausgestaltet und eingerichtet sind, einen vom Positionserfassungssensor umfassten zweiten Funk-Transponder induktiv mit Energie zu versorgen und eine Speichereinheit des zweiten Funk-Transponders auszulesen bzw. zu beschreiben.

Entsprechend einer bevorzugten Ausgestaltung des erfindungsgemäßen Positionserfassungssystems sind die ersten Funk-Transponder-Lesegeräte Basisstationen eines RFID-basierten Positionserfassungssystems oder bilden diese, während der zweite Funk-Transponder ein UHF-Transponder ist und die zweiten Funk-Transponder-Lesegeräte UHF-Transponder-Lesegeräte sind. Dies ermöglicht eine kostengünstige und zuverlässige Realisierung eines RFID-basierten Positionserfassungssystems.

Die vorliegende Erfindung wird nachfolgend an einem Ausführungsbeispiel anhand der Zeichnung näher erläutert. Es zeigt
- Figur 1: ein RFID-basiertes Positionserfassungssystem mit mehreren Funk-Transponder-basierten Positionserfassungssensoren und mehreren Funk-Transponder-Lesegeräten,
- Figur 2: eine schematische Darstellung einer nicht beanspruchten Variante eines Positionserfassungssensors entsprechend Figur 1,
- Figur 3: eine schematische Darstellung einer beanspruchten Variante eines Positionserfassungssensors entsprechend Figur 1.

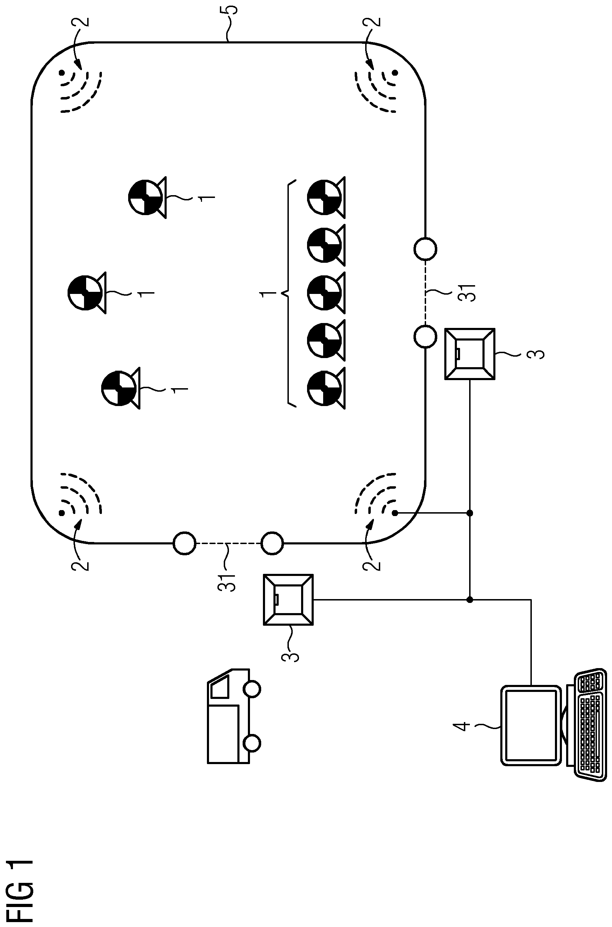

Das in Figur 1 dargestellte RFID-basierte Positionserfassungssystem ermöglicht eine Überwachung von zu erfassenden Gegenständen mit an diesen befestigten RFID-basierten Positionserfassungssensoren 1 innerhalb eines vorgegebenen Überwachungsbereichs 5, beispielsweise einer Lagerhalle. Innerhalb des Überwachungsbereichs 5 sind mehrere mittels erster Funk-Transponder-Lesegeräte realisierte Basisstationen 2 des RFID-basierten Positionserfassungssystems und mehrere UHF-Transponder-Lesegeräte 3 angeordnet, die zweite Funk-Transponder-Lesegeräte darstellen. Die Basisstationen 2 weisen jeweils eine Kommunikationsverbindung zu einem Server 4 des RFID-basierten Positionserfassungssystems auf, während die UHF-Transponder-Lesegeräte 3 mit ihrem jeweiligen Erfassungsbereich 31 vorteilhafterweise auf Zugangspunkte des Überwachungsbereichs 5 ausgerichtet sind, beispielsweise auf Tore einer Lagerhalle.

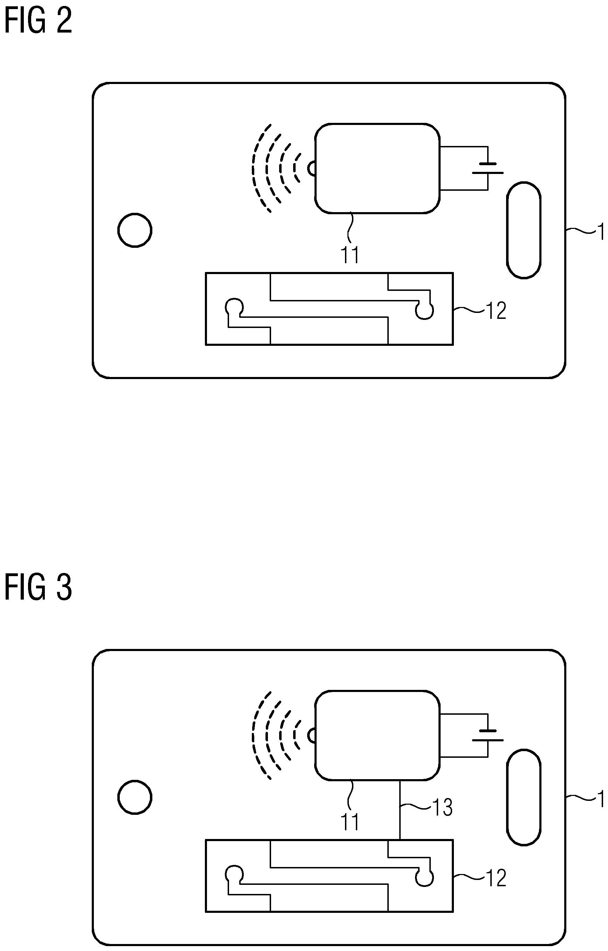

Entsprechend Figur 2 und 3 umfassen die RFID-basierten Positionserfassungssensoren 1 jeweils als Ortungssensor einen ersten Funk-Transponder 11, der eine mit einer Antenne verbundene Sende- und Empfangseinheit zum Datenaustausch über eine Funk-Transponder-Schnittstelle, eine Speichereinheit zur persistenten Datenspeicherung und eine Energieversorgungsquelle, beispielsweise eine Batterie oder einen Akku, aufweist, die mit der Sende- und Empfangseinheit und der Speichereinheit verbindbar ist, um diese mit elektrischer Energie zu versorgen. Die Speichereinheit eines ersten Funk-Transponders 11 kann mittels der in die Basisstationen 2 integrierten erster Funk-Transponder-Lesegeräte ausgelesen bzw. beschrieben werden und weist als Speicherinhalt zumindest einen Transponder-Identifikator auf. Dementsprechend sind die in die Basisstationen 2 integrierten ersten Funk-Transponder-Lesegeräte dafür konfiguriert, die Speichereinheit eines ersten Funk-Transponders 11 auszulesen bzw. zu beschreiben und eine Distanzermittlung zwischen einem ersten Funk-Transponder 11 und einem ersten Funk-Transponder-Lesegerät durchzuführen, beispielsweise anhand einer Signallaufzeit.

Die ersten Funk-Transponder 11 können wahlweise in einen Ruhezustand mit reduziertem Energieverbrauch und in einen aktiven Betriebszustand mit vollständigem Funktionsumfang versetzt werden. Des weiteren sind die ersten Funk-Transponder 11 dafür konfiguriert, im aktiven Betriebszustand zumindest eine Funk-Verbindung zur Positionserfassung zu zumindest einem ersten Funk-Transponder-Lesegerät aufzubauen, um zumindest eine Distanzermittlung zu einem ersten Funk-Transponder-Lesegerät durchzuführen.

Darüber hinaus umfassen die RFID-basierten Positionserfassungssensoren 1 jeweils einen passiv bzw. induktiv durch ein Funk-Transponder-Lesegerät mit Energie versorgbaren UHF-Transponder als zweiten Funk-Transponder 12. Die zweiten Funk-Transponder 12 weisen jeweils eine mit einer Antenne verbundene Sende- und Empfangseinheit zum Datenaustausch über eine Funk-Transponder-Schnittstelle und eine Speichereinheit zur persistenten Datenspeicherung auf. Die Speichereinheit eines zweiten Funk-Transponders 12 kann mittels zweiter Funk-Transponder-Lesegeräte ausgelesen bzw. beschrieben werden und weist als Speicherinhalt zumindest einen Transponder-Identifikator auf, der im vorliegenden Ausführungsbeispiel identisch mit in der Speichereinheit des ersten Funk-Transponders 11 gespeicherten Transponder-Identifikator ist. Dementsprechend sind die UHF-Transponder-Lesegeräte 2 als zweite Funk-Transponder-Lesegeräte dafür konfiguriert, einen zweiten Funk-Transponder 12 induktiv mit Energie zu versorgen und die Speichereinheit des zweiten Funk-Transponders auszulesen bzw. zu beschreiben.

Die zweiten Funk-Transponder 12 sind außerdem dafür konfiguriert, bei Eintritt in einen Erfassungsbereich 31 eines zweiten Funk-Transponder-Lesegerätes den ersten Funk-Transponder 11 aus dem Ruhezustand in den aktiven Betriebszustand zu versetzen.

Entsprechend der in Figur 2 dargestellten nicht beanspruchten Variante eines Positionserfassungssensors 1 besteht im Gegensatz zu der in Figur 3 dargestellten beanspruchten Variante keine elektrische Verbindung 13 zwischen dem ersten Funk-Transponder 11 und dem zweiten Funk-Transponder 12. Daher ist für diese Variante bei Eintritt in einen Erfassungsbereich 31 eines zweiten Funk-Transponder-Lesegerätes kein Versetzen des ersten Funk-Transponders 11 aus dem Ruhezustand in den aktiven Betriebszustand vorgesehen, sondern der zweite Funk-Transponder 12 übermittelt in diesem Fall seine zugeordnete Positionsinformation über das jeweilige zweite Funk-Transponder-Lesegerät an den Server 4.

Bei der in Figur 3 dargestellten beanspruchten Variante mit einer elektrischen Verbindung zwischen dem ersten Funk-Transponder 11 und dem zweiten Funk-Transponder 12 versetzt der zweite Funk-Transponder 12 den ersten Funk-Transponder 11 bei Eintritt in einen Erfassungsbereich 31 eines zweiten Funk-Transponder-Lesegerätes aus dem Ruhezustand in den aktiven Betriebszustand. Dementsprechend ist der erste Funk-Transponder 11 bei der beanspruchten Variante dafür konfiguriert, nach einem Aktivieren aus dem Ruhezustand zumindest eine Funk-Verbindung zur Positionserfassung zu zumindest einem ersten Funk-Transponder-Lesegerät aufzubauen. Im vorliegenden Ausführungsbeispiel ist bei der beanspruchten Variante außerdem vorgesehen, dass die Speichereinheit des ersten Funk-Transponders 11 über den zweiten Funk-Transponder 12 mittels zweiter Funk-Transponder-Lesegeräte ausgelesen bzw. beschrieben werden kann, ohne dass hierzu ein erstes Funk-Transponder-Lesegerät erforderlich ist.

## Patentansprüche

1. Positionserfassungssensor (1) mit
- einem an einem zu erfassenden Gegenstand befestigbaren, als Ortungssensor ausgestalteten ersten Funk-Transponder (11), der
- eine mit einer Antenne verbundene Sende- und Empfangseinheit zum Datenaustausch über eine Funk-Transponder-Schnittstelle,
- eine Speichereinheit zur persistenten Datenspeicherung, die mittels Basisstationen eines RFID-basierten Positionserfassungssystems (2) auslesbar und/oder beschreibbar ist und in der zumindest ein Transponder-Identifikator gespeichert ist, und
- eine Batterie oder einen Akku als Energieversorgungsquelle aufweist, die mit der Sende- und Empfangseinheit und der Speichereinheit verbindbar ist,
- wobei der erste Funk-Transponder (11) wahlweise in einen Ruhezustand mit reduziertem Energieverbrauch und in einen aktiven Betriebszustand mit vollständigem Funktionsumfang versetzbar ist und
- wobei der erste Funk-Transponder (11) dazu ausgestaltet und eingerichtet ist, im aktiven Betriebszustand zumindest eine Funk-Verbindung zur Positionserfassung zu zumindest einer Basisstation (2) aufzubauen,
- einem induktiv durch ein UHF-Transponder-Lesegerät (3) mit Energie versorgbaren, als UHF-Transponder ausgestalteten zweiten Funk-Transponder (12), der
- mit dem ersten Funk-Transponder (11) elektrisch verbunden ist,
- eine mit einer Antenne verbundene Sende- und Empfangseinheit zum Datenaustausch über eine Funk-Transponder-Schnittstelle und
- eine Speichereinheit zur persistenten Datenspeicherung aufweist, die mittels zweiter Funk-Transponder-Lesegeräte (3) auslesbar und/oder beschreibbar ist und in der zumindest ein Transponder-Identifikator gespeichert ist,
- wobei der zweite Funk-Transponder (12) dazu ausgestaltet und eingerichtet ist, bei Eintritt in einen Erfassungsbereich (31) eines zweiten Funk-Transponder-Lesegerätes (3) den ersten Funk-Transponder aus dem Ruhezustand in den aktiven Betriebszustand zu versetzen.

2. Sensor nach Anspruch 1
bei dem die Speichereinheit des ersten Funk-Transponders (11) über den zweiten Funk-Transponder (12) mittels UHF-Funk-Transponder-Lesegeräte (3) auslesbar und/oder beschreibbar ist.

3. Sensor nach einem der Ansprüche 1 bis 3,
bei dem die in den Speichereinheiten des ersten und des zweiten Funk-Transponders gespeicherten Transponder-Identifikatoren identisch sind.

4. Sensor nach einem der Ansprüche 1 bis 5,
bei dem die einem Funk-Transponder zugeordnete Positionsinformation den jeweiligen Transponder-Identifikator umfasst.

5. Positionserfassungssystem mit
- zumindest einem Positionserfassungssensor (1) nach einem der Ansprüche 1 bis 4,
- mehreren Basisstationen (2) eines RFID-basierten Positionserfassungssystems, die jeweils dazu ausgestaltet und eingerichtet sind, eine Speichereinheit eines vom Positionserfassungssensor (1) umfassten ersten Funk-Transponders (11) auszulesen und/oder zu beschreiben,
- mehreren UHF-Funk-Transponder-Lesegeräten (3), die jeweils dazu ausgestaltet und eingerichtet sind, einen vom Positionserfassungssensor umfassten, als UHF-Transponder ausgestalteten zweiten Funk-Transponder (12) induktiv mit Energie zu versorgen und eine Speichereinheit des zweiten Funk-Transponders (12) auszulesen und/oder zu beschreiben.

## Claims

1. Position detection sensor (1) having
- a first radio transponder (11) designed as a location sensor and able to be attached to an object to be detected, which transponder has
- a transceiver unit, connected to an antenna, for exchanging data via a radio transponder interface,
- a storage unit for persistent data storage that is able to be read and/or able to be written to by way of base stations of an RFID-based position detection system (2) and in which at least one transponder identifier is stored, and
- a battery or a rechargeable battery as a power source that is able to be connected to the transceiver unit and the storage unit,
- wherein the first radio transponder (11) is selectively able to be switched into a standby state with reduced power consumption and into an active operating state with full functionality and
- wherein the first radio transponder (11) is designed and configured so as to establish at least one radio connection for position detection with at least one base station (2) in the active operating state,
- a second radio transponder (12) designed as a UHF transponder and able to be supplied with power inductively by a UHF transponder reader (3) and that is electrically connected to the first radio transponder (11), and has
- a transceiver unit, connected to an antenna, for exchanging data via a radio transponder interface and
- a storage unit for persistent data storage that is able to be read and/or able to be written to by way of second radio transponder readers (3) and in which at least one transponder identifier is stored,
- wherein the second radio transponder (12) is designed and configured so as, upon entry into a detection range (31) of a second radio transponder reader (3), to switch the first radio transponder from the standby state into the active operating state.

2. Sensor according to Claim 1,
wherein the storage unit of the first radio transponder (11) is able to be read and/or able to be written to by way of UHF radio transponder readers (3) via the second radio transponder (12) .

3. Sensor according to one of Claims 1 to 3,
wherein the transponder identifiers stored in the storage units of the first and of the second radio transponder are identical.

4. Sensor according to one of Claims 1 to 5,
wherein the position information associated with a radio transponder comprises the respective transponder identifier.

5. Position detection system having
- at least one position detection sensor (1) according to one of Claims 1 to 4,
- a plurality of base stations (2) of an RFID-based position detection system, said base stations each being designed and configured so as to read and/or to write to a storage unit of a first radio transponder (11) comprised by the position detection sensor (1),
- a plurality of UHF radio transponder readers (3) that are each designed and configured so as to inductively supply power to a second radio transponder (12) designed as a UHF transponder and comprised by the position detection sensor and to read and/or to write to a storage unit of the second radio transponder (12).

## Revendications

1. Capteur (1) de détection de position, comprenant
- un premier transpondeur (11) radio, conformé en capteur de localisation et pouvant être fixé à un objet à détecter, qui a
- une unité d'émission et de réception reliée à une antenne pour échanger des données par une interface de transpondeur radio,
- une unité de mémoire pour la mise en mémoire persistante de données, qui peut être lue au moyen de postes de base d'un système (2) de détection de position reposant sur RFID et/ou dans laquelle on peut écrire et dans laquelle est mis en mémoire au moins un identifiant de transpondeur, et
- une batterie ou un accumulateur comme source d'alimentation en énergie, qui peut être connectée à l'unité d'émission et de réception et à l'unité de mémoire,
- dans lequel le premier transpondeur (11) radio peut être mis, au choix, dans un état de repos à consommation d'énergie réduite et dans un état de fonctionnement actif ayant une ampleur de fonction complète et
- dans lequel le premier transpondeur (11) radio est conformé et conçu pour établir, dans l'état de fonctionnement actif, au moins une liaison radio de détection de position par rapport à au moins un poste (2) de base,
- un deuxième transpondeur (12) radio, conformé en transpondeur UHF et pouvant être alimenté en énergie inductivement par un appareil (3) de lecture de transpondeur UHF, qui
- est connecté électriquement au premier transpondeur (11) radio,
- à une unité d'émission et de réception reliée par une antenne pour l'échange de données par une interface de transpondeur radio et
- une unité de mémoire pour la mise en mémoire persistante de données, qui peut être lue au moyen de deuxième appareil (3) de lecture de transpondeur radio et/ou dans laquelle on peut écrire et dans laquelle est mis en mémoire au moins un identifiant de transpondeur,
- dans lequel le deuxième transpondeur (12) radio est conformé et conçu pour, à l'entrée dans une région (31) de détection d'un deuxième appareil (3) de lecture de transpondeur radio, faire passer le premier transpondeur radio de l'état de repos à l'état de fonctionnement actif.

2. Capteur suivant la revendication 1,
dans lequel l'unité de mémoire du premier transpondeur (11) radio peut être lue par l'intermédiaire du deuxième transpondeur (12) radio au moyen d'appareils (3) de lecture de transpondeur radio UHF et/ou on peut y écrire.

3. Capteur suivant l'une des revendications 1 à 3,
dans lequel, dans les unités de mémoire du premier et du deuxième transpondeurs radio, les identifiants de transpondeur mis en mémoire sont identiques.

4. Capteur suivant l'une des revendications 1 à 5,
dans lequel l'information de position associée à un transpondeur radio comprend l'identifiant respectif de transpondeur.

5. Système de détection de position, comprenant
- au moins un capteur (1) de détection de position suivant l'une des revendications 1 à 4,
- plusieurs postes (2) de base d'un système de détection de position reposant sur RFID, qui sont conformés et conçus chacun pour lire une unité de mémoire d'un premier transpondeur (11) radio compris par le capteur (1) de détection de position et/ou y écrire,
- plusieurs appareils (3) de lecture de transpondeur radio UHF, qui sont conformés et conçu chacun pour alimenter en énergie inductivement un deuxième transpondeur (12) radio compris par le capteur de détection de position et conformé en transpondeur UHF et pour lire une unité de mémoire du deuxième transpondeur (12) radio et/ou y écrire.
